Europäisches Patentamt

European Patent Office

Office européen des brevets

(19)

(11) Veröffentlichungsnummer: **0 183 162**
**B1**

(12) **EUROPÄISCHE PATENTSCHRIFT**

(45) Veröffentlichungstag der Patentschrift:
22.03.89

(51) Int. Cl.⁴: **C 12 H 1/04, C 12 C 7/14**

(21) Anmeldenummer: **85114640.7**

(22) Anmeldetag: **18.11.85**

(54) Adsorptionsmittel.

(30) Priorität: **28.11.84 AT 3776/84**

(43) Veröffentlichungstag der Anmeldung:
**04.06.86 Patentblatt 86/23**

(45) Bekanntmachung des Hinweises auf die Patenterteilung:
**22.03.89 Patentblatt 89/12**

(84) Benannte Vertragsstaaten:
**BE CH DE FR GB IT LI LU NL SE**

(56) Entgegenhaltungen:
**DE-A- 1 567 561**
**FR-A- 2 021 756**
**FR-A- 2 122 696**
**GB-A- 1 113 504**
**US-A- 3 328 124**

**CHEMICAL ABSTRACTS, Band 87, Nr. 23, Dezember 1977, Seite 458, Zusammenfassung Nr. 182541d, Columbus, Ohio, US; R. BEHNKE et al.: "Combined PVPP-Kieselgel treatment. Practical treatment in the experience with U.S. beer and German beers", & BRAUWELT 1977, 117(33), 1106-9, 1112**

(73) Patentinhaber: **Steirische Magnesit-Industrie Aktiengesellschaft, Fleschgasse 34, A-1130 Wien (AT)**

(72) Erfinder: **Birkner, Friedrich, Dr., A-3384 Gr. Sierning Nr. 33 (AT)**

(74) Vertreter: **Kliment, Peter, Dipl.-Ing. Mag.-Jur., Singerstrasse 8, A-1010 Wien (AT)**

**Beschreibung**

Die Erfindung ermöglicht die Erhöhung der Eiweissstabilität von Bier.

Es ist bekannt, zur Verbesserung der Eiweissstabilität von Bier Kieselgele (Hydrogele bzw. Xerogele) einzusetzen.

Die zu diesem Zweck derzeit meist verwendeten Kieselgele weisen in der Regel einen Porendurchmesser von mehr als 6 nm auf und es wurde angenommen, dass die Verwendung solcher grobporiger Kieselgele zur Erreichung der gewünschten Filtrier- und Stabilisierungswirkung erforderlich sei.

Aus Vorveröffentlichungen sind auch Verfahren zur Behandlung von Bier bekannt, nach welchen Kieselgele mit einer inneren Oberfläche von mindestens 700 m²/g und einem mittleren Porendurchmesser von 2,5 bis 12 nm, vorzugsweise 4 bis 8 nm, verwendet werden sollen. In solchen Kieselgelen liegt eine relativ breite Verteilung der Porenweiten vor, sodass diese Gele keine exakt definierten Porengrössen und auch grobkörnige Anteile aufweisen.

Bei Verwendung grobkörniger Kieselgele bzw. auch grobkörnige Anteile enthaltender Kieselgele werden jedoch Eiweisskörper mit niedrigem bzw. mittlerem Molekulargewicht bevorzugt und besonders fest adsorbiert. Proteine mit hohem Molekulargewicht, die hauptverantwortlich für die Kältetrübung der Biere sind, werden hingegen in geringerem Ausmass entfernt, da sie aufgrund ihrer Grösse nur an der äusseren Oberfläche und nicht in den Poren adsorbiert werden können.

Dies ist von Nachteil, da nieder- bzw. mittelmolekulare Eiweissstoffe für Geschmack bzw. Schaumstabilität von ausschlaggebender Bedeutung sind und nur ein Teil der hochmolekularen Eiweissstoffe in Verbindung mit Gerbstoffen die Kältetrübung hervorruft. Ziel vorliegender Erfindung ist es, diesen Nachteil durch ein gleichmässigeres Entfernen von Eiweissstoffen bzw. Gerbstoffeiweissverbindungen aller Fraktionen aus dem Bier zu überbrücken. Dies wird erfindungsgemäss dadurch ermöglicht, dass ein durch Säurebehandlung von silikathaltigen Mineralien erhaltenes Kieselgel eingesetzt wird, dessen Porendurchmesser 4 nm, vorzugsweise 2 nm nicht überschreitet, wobei alle Eiweissfraktionen nur an der äusseren Oberfläche des Gels adsorbiert werden und somit eine bevorzugte Adsorption der kürzerkettigen Eiweissmoleküle ausgeschlossen wird. Die Erklärung dafür beruht darauf, dass durch Säurebehandlung von silikathaltigen Mineralien erhaltene Kieselgele zwar innere Oberflächenhaltigen Mineralien erhaltene Kieselgele zwar innere Oberflächen von bis zu 700 m²/g nicht aufweisen, aber durch Herauslösen aus dem Silikatkristallgitter genau definierte Löcher, d.h. genau definierte Porenweiten erhalten werden, die bei einem in üblicher Weise aus einem Alkalimetallsilikat und Säure erhaltenen Kieselgel nicht vorliegen können.

Es konnte ferner festgestellt werden, dass ein durch die Verwendung von engporigem an Stelle von grobporigem Kieselgel beim Filtrieren des Bieres eintretender Kapazitätsverlust durch Zusatz von bereits geringen Mengen von Polyvinylpolypyrrolidon (PVPP) mehr als wettgemacht werden kann. Die an sich bekannte Verwendung von PVPP zur Stabilisierung und Klärung von Bier beruht darauf, dass PVPP die im Bier enthaltenen Polyphenole abbindet, welche zusammen mit den im Bier vorliegenden Eiweissstoffen eine Trübung desselben bewirken können. Erfindungsgemäss genügen bei Verwendung von engporigem Kieselgel bereits geringe Mengen von PVPP für eine wesentliche Verbesserung der Bierstabilität.

Demnach betrifft die Erfindung die Verwendung eines durch Säurebehandlung von silikathaltigen Mineralien erhaltenen engporigen Kieselgels mit einem Porendurchmesser von höchstens 4 nm, vorzugsweise höchstens 2 nm, gegebenenfalls zusammen mit Polyvinylpolypyrrolidon (PVPP) und/oder anderen Bierstabilisierungsmitteln beim Filtrieren von Bier zwecks Erzielung einer erhöhten Eiweissstabilität desselben. Erfindungsgemäss bevorzugt wird die Verwendung von Kieselgel mit einem Porendurchmesser von höchstens 2 nm zusammen mit 2 Gew.-% PVPP.

Erfindungsgemäss zu verwendende Kieselgele werden durch Säurebehandlung von silikathaltigen Mineralien, z.B. Magnesiumhydrosilikaten (Serpentin), hergestellt.

Die erfindungsgemäss erzielbaren Vorteile sollen an Hand eines Beispiels erläutert werden.

Bei einem 12%igen Lagerbier wurde ein Stabilisierungsvergleich bei Verwendung eines bekannten weitporigen Kieselgels und eines gemäss der Erfindung eingesetzten engporigen Kieselgels mit einem Porendurchmesser von 2 nm bzw. letzteren Kieselgels gemischt mit PVPP durchgeführt.

Die Einsatzmengen betrugen in allen Fällen 40 g/hl.

Nachfolgende Resultate geben Auskunft über die jeweils erreichte kolloidale Bierstabilität und die im stabilisierten Bier enthaltenen Eiweissfraktionen und Gerbstoffe.

| | Lager Bier mit 40 g/hl handelsüblichem Kieselgel | Lager Bier mit 40 g/hl engporigem Kieselgel | Lager Bier mit 40 g/hl engporigem Kieselgel + 2% PVPP |
|---|---|---|---|
| Chapon Kältetest | 4,0 EBC-F.E.* | 3,5 EBC-F.E. | 0,5 EBC-F.E. |
| Ammonsulfat-fällungsgrenze | 0,9 | 0,9 | 1,5 |
| Esbach-fällungsgrenze | 0,4 | 0,4 | 0,9 |
| Wechseltest 0/60/0 | 0,30/0,55/3,1/7,9/9,7/ über 12 5 Warmtage | 0,30/0,53/2,0/5,6/7,8/ 10,1/über 12 6 Warmtage | 0,30/0,50/1,5/3,8/5,6/ 7,6/10,3/über 12 7 Warmtage |
| 0/40/0 | 0,30/0,50/1,0/1,9/2,5/ 3,5/4,2/5,1/6,0/8,4/ über 12 10 Warmtage | 0,30/0,50/0,90/1,8/ 2,3/3,0/3,9/4,5/5,7/ 7,8/9,2/über 12 11 Warmtage | 0,30/0,45/0,60/0,80/1,0/ 1,4/2,4/3,6/4,7/5,8/6,9/ 8,2/9,8/über 12 13 Warmtage |
| spezielle Eiweissverhältnisse: | | | |
| Gesamt-N mg/100 ml | 63,0 | 61,5 | 60,0 |
| Koag. N mg/100 ml | 1,7 | 1,7 | 1,6 |
| Hochmol. N mg/100 ml | 19,0 | 16,5 | 16,0 |
| Mittelmol. N. mg/100 ml | 13,5 | 13,5 | 13,0 |
| Niedermol. N. mg/100 ml | 30,5 | 31,5 | 31,0 |
| Spezielle Gerbstoffverhältnisse: | | | |
| Gesamtpolyphenole mg/l | 136 | 137 | 121 |
| Anthocyanogene mg/l | 25,2 | 24,8 | 23,7 |
| Polymerisationsindex | 5,4 | 5,5 | 5,1 |

\* European Brewer Corp.-Formacin-Einheiten

Diese Resultate zeigen insbesondere die erfindungsgemäss erzielbare Erhöhung der Bierstabilität ausgedrückt in Warmtagen, vor allem bei Verwendung eines engporigen Kieselgels zusammen mit PVPP.

## Patentansprüche

1. Verwendung eines durch Säurebehandlung von silikathaltigen Mineralien erhaltenen Kieselgels mit einem Porendurchmesser von höchstens 4 nm, vorzugsweise höchstens 2 nm, gegebenenfalls zusammen mit Polyvinylpolypyrrolidon (PVPP) und/oder anderen Bierstabilisierungsmitteln beim Filtrieren von Bier.

2. Verwendung eines durch Säurebehandlung von silikathaltigen Mineralien erhaltenen Kieselgels mit einem Porendurchmesser von höchstens 4 nm, vorzugsweise höchstens 2 nm, und 2 bis 5 Gew.-% PVPP für den in Anspruch 1 angegebenen Zweck.

3. Verwendung eines durch Säurebehandlung von silikathaltigen Mineralien erhaltenen Kieselgels mit einem Porendurchmesser von höchstens 2 nm und 2 Gew.-% PVPP für den in Anspruch 1 angegebenen Zweck.

## Revendications

1. Application, lors de la filtration de la bière, d'un gel de silice que l'on a obtenu en traitant des minéraux silicatés par un acide et qui présente un diamètre de pores d'au plus 4 nm, de préférence d'au plus 2 nm, éventuellement en association avec de la poly-(vinyl-pyrrolidone) (PVPP) et/ou d'autres stabilisants de la bière.

2. Application d'un gel de silice que l'on a obtenu en traitant des minéraux silicatés par un acide et qui a un diamètre de pores d'au plus 4 nm, de préférence d'au plus 2 nm, et de 2 à 5% en poids de PVPP, pour le but indiqué à la revendication 1.

3. Application d'un gel de silice que l'on a obtenu en traitant des minéraux silicatés par un acide et qui a un diamètre de pores d'au plus 2 nm et de 2% en poids de PVPP, pour le but indiqué à la revendication 1.

## Claims

1. Use of a silica gel obtained by acid treatment of silicate-containing minerals having a pore diameter of at the most 4 nm, preferably at the most 2 nm, possibly together with poly vinyl poly pyrrolidones (PVPP) and/or other beer stabilising agents during the filtration of beer.

2. Use of a silica gel obtained by acid treatment of silicate-containing minerals having a pore diameter of at the most 4 nm, preferably at the most 2 nm, and 2 to 5% by weight of PVPP for the purpose stated in claim 1.

3. Use of a silica gel obtained by acid treatment of silicate-containing minerals having a pore diameter of at the most 2 nm and 2% by weight of PVPP for the purpose stated in claim 1.